# EUROPÄISCHE PATENTSCHRIFT

(11) **EP 3 377 861 B1**
(45) Veröffentlichungstag und Bekanntmachung des Hinweises auf die Patenterteilung: **04.09.2019**
(21) Anmeldenummer: 16788473.3
(22) Anmeldetag: 21.10.2016
(51) Int. Cl.: G01D 18/00, G01K 15/00

(54) **VERFAHREN ZUR IN-SITU KALIBRIERUNG EINER ANALOGEN MESSÜBERTRAGUNGSSTRECKE UND ENTSPRECHENDE VORRICHTUNG**
IN-SITU CALIBRATION METHOD OF AN ANALOG MEASUREMENT TRANSMISSION CONNECTION AND CORRESPONDING APPARATUS
METHODE DE CALIBRATION IN-SITU D'UNE VOIE DE TRANSMISSION ANALOGUE ET APPAREIL CORRESPONDANT

(30) Priorität: 19.11.2015 DE 102015120072
(43) Veröffentlichungstag der Anmeldung: 26.09.2018
(73) Patentinhaber: Endress+Hauser Wetzer GmbH+Co. KG, 87484 Nesselwang (DE)
(72) Erfinder: HEITZ, Ulrich, 64653 Lorsch (DE); KOCH, Daniel, 87509 Immenstadt (DE); STAHL, Marc, 87487 Wiggensbach (DE)
(74) Vertreter: Andres, Angelika Maria
(86) Internationale Anmeldenummer: PCT/EP2016/075322
(87) Internationale Veröffentlichungsnummer: WO 2017/084828

(56) Entgegenhaltungen:
- DE-A1-102011 107 856
- US-A- 4 532 601

## Beschreibung

Die Erfindung betrifft ein Verfahren zur in-situ Kalibrierung einer analogen Messübertragungsstrecke während der Bestimmung und/oder Überwachung einer Prozessgröße eines Mediums, wobei über die Messübertragungsstrecke analoge elektrische Signale von einer Regel-/Auswerteeinheit zu einer Steuerungseinheit übertragen werden. Die Regel-/Auswerteeinheit ist dabei einem Sensor zugeordnet. Der Sensor bestimmt und/oder überwacht die Prozessgröße anhand mindestens einer für die Prozessgröße sensitiven Komponente. Bei der Prozessgröße handelt es sich beispielsweise um die Temperatur, die Dichte, die Viskosität, den Druck, den Füllstand, den Durchfluss, die chemische Zusammensetzung, die Temperatur oder Analysedaten, wie den pH-Wert, die Trübung oder die Leitfähigkeit eines Mediums. Entsprechende Sensoren werden von der E+H Gruppe in unterschiedlichsten Ausgestaltungen angeboten und vertrieben. Bei dem Medium kann es sich beispielsweise um eine Flüssigkeit oder ein Gas handeln. Bei den analogen elektrischen Signalen handelt es sich beispielsweise um Ströme, Spannungen oder Kapazitäten.

Ferner betrifft die Erfindung eine Vorrichtung, deren Komponenten zur Ausführung des Verfahrens ausgestaltet sind.

Üblicherweise werden die Messwerte eines Sensors dem Anwender während des Betriebs über eine Kommunikationsinfrastruktur einer sich außerhalb des Sensors befindlichen Steuerungseinheit bereitgestellt. Dies wird beispielsweise durch eine drahtlose oder eine drahtgebundene digitale Kommunikationsinfrastruktur geleistet. In einer Vielzahl von Anwendungen in der Automatisierungstechnik erfolgt die Messwertübertragung und die Energieversorgung des Sensors über eine Zweidrahtleitung. Dies ist insbesondere in den Bereichen der Automatisierungstechnik von Bedeutung, in denen Einschränkungen an die dem Sensor zugeführte Energie vorliegen, was immer der Fall ist, wenn Sensoren in explosionsgefährdeten Bereichen eingesetzt werden.

Als elektrische Signale werden dabei Einheitssignale benutzt. Für Ströme existieren dabei nach der DIN IEC 60381-1 die standardisierten Messbereiche von 0-20mA und 4-20mA. Der Messbereich von 4-20mA hat dabei gegenüber dem 0-20mA Messbereich den Vorteil, dass eine Drahtüberwachung ermöglicht wird, da ein Signal von 0mA ein sicherer Hinweis auf eine Störung ist. In der Automatisierungstechnik hat sich daher der 4-20mA Standard etabliert. Zusätzlich zu dem Messbereich von 4-20mA existieren auch Standards für einen minimalen und maximalen Strom, bei dem ein Alarm ausgelöst wird. Nach der NAMUR Empfehlung NE43 wird unterhalb eines minimalen Stroms von 3,8mA und oberhalb eines maximalen Stroms von 20,5mA ein Fehleralarm ausgelöst.

Das Highway Addressable Remote Transducer (HART) Verfahren ist ein standardisiertes, weit verbreitetes digitales Kommunikationssystem, das auf den 4-20mA Standard zur Stromübertragung aufsetzt. Ein digitales Signal wird erzeugt, indem auf das analoge Signal eine hochfrequente Schwingung mit 1,2kHz und 2,2kHz aufmoduliert wird. Auch eine derartige HART Schnittstelle, welche die zusätzliche Übertragung digitaler Information über eine analoge Strom-Messübertragungsstrecke ermöglicht, ist in der Praxis nicht immer vorhanden.

In diesem Fall können zwischen dem Sensor und der Steuerungseinheit nur analoge elektrische Signale übertragen werden. Der Sensor besitzt eine Regel-/Auswerteeinheit, die die mindestens eine sensitive Komponente des Sensors ansteuert, den Messwert der mindestens einen sensitiven Komponente auswertet und ein die Prozessgröße repräsentierendes analoges elektrisches Signal erzeugt. Das analoge elektrische Signal wird dann über die analoge Messübertragungsstrecke der sich außerhalb des Sensors befindlichen Steuerungseinheit bereitgestellt. Die Steuerungseinheit ist zum Beispiel in einer Leitwarte angeordnet oder ist mit einer Leitwarte verbunden. Das elektrische Signal stammt dabei aus einem als Nutzbereich bezeichneten Wertebereich. Der Nutzbereich ist dabei so gewählt, dass er den im Prozess maximal und minimal angenommen Prozessgrößen entspricht.

Der Anwender parametriert die Messübertragungsstrecke dabei so, dass der für den Prozess gewählte Nutzbereich eine echte Teilmenge des standardisierten Messbereichs ist. Eine echte Teilmenge bedeutet, dass der Nutzbereich innerhalb des standardisierten Messbereichs liegt, es aber zusätzlich noch Bereiche des Messbereichs gibt, welche während des Prozesses nicht angenommen werden, da sie unterhalb bzw. oberhalb des Nutzbereichs liegen.

Da die analoge Messübertragungsstrecke während des Einsatzes eine Drift erfahren kann, ist oftmals eine periodische Re-Kalibrierung der analogen Messübertragungsstrecke notwendig. Hierbei wird die gesamte elektrische Schaltung, welche zur Übertragung der analogen elektrischen Signale genutzt wird, überprüft. Im Stand der Technik sind hierzu Verfahren bekannt, die simulierte elektrische Signale zur Kalibrierung benutzen. Beispielsweise vertreibt die Firma Fluke Calibration ein Gerät, das simulierte analoge elektrische Signale erzeugt, um damit eine Messübertragungsstrecke zu überprüfen und/oder zu kalibrieren. Diese Re-Kalibrierung ist mit einem Ausbau des Sensors verbunden und stellt daher einen großen Aufwand dar.

Die US 4532601 A1 beschreibt eine Kalibrierung von elektrischen Leitungen, ohne dass diese getrennt werden müssen. Dies geschieht durch Einspeisung einer Referenzspannung, deren Effekt von einem Mikroprozessor auf die damit übertragenen Messwerte wieder herausgerechnet wird

Die DE 10 2011 107 856 A1 offenbart eine in-situ Kalibrierung eines widerstandsbasierten Thermometers. Hierbei wird eine separate Kalibriereinheit mit einem zusätzlichen Thermometer eingesetzt.

Der Erfindung liegt die Aufgabe zugrunde, ein Verfahren und eine Vorrichtung anzugeben, weiche eine in-situ Kalibrierung der Messübertragungsstrecke ermöglichen.

Die Aufgabe wird erfindungsgemäß gelöst, indem der Sensor entweder in einem Messmodus oder in einem Simulationsmodus betrieben wird. Im Messmodus wandelt die Regel-/Auswerteeinheit die Messwerte der mindestens einen sensitiven Komponente des Sensors in das analoge elektrische Signal um. Im Simulationsmodus gibt die Regel-/Auswerteeinheit für eine festgelegte Zeitspanne zumindest ein eindeutig als simuliert erkennbares analoges elektrisches Signal aus, das von der Steuerungseinheit erkannt und erfasst wird. Im Simulationsmodus wird eine Kalibrierung der Messübertragungsstrecke vorgenommen, indem die Steuerungseinheit die Abweichung zwischen dem von der Regel-/Auswerteeinheit vorgegebenen analogen elektrischen Signal und dem erfassten analogen elektrischen Signals bestimmt. In einer Variante wird im Falle einer Abweichung das erfasste analoge elektrische Signal in der Steuerungseinheit noch zusätzlich entsprechend nachkorrigiert.

Der Kern der Erfindung ist also, dass der Sensor sowohl im Messmodus, als auch im Simulationsmodus betrieben werden kann und im Simulationsmodus die analoge Messübertragungsstrecke kalibriert wird. Dadurch muss der Sensor nicht mehr ausgebaut werden, um die Messübertragungstrecke zu kalibrieren. Die in-situ Kalibrierung der analogen Messübertragungsstrecke wird durch eine geeignete Ausgestaltung der Steuerungseinheit und der Regel-/Auswerteeinheit des Sensors ermöglicht. Eine Kalibrierung der Messübertragungsstrecke kann dadurch realisiert und angezeigt werden, dass die Regel-/Auswerteeinheit für eine definierte Zeitspanne zumindest ein konstantes simuliertes analoges elektrische Signal an die Messübertragungsstrecke ausgibt.

Eine vorteilhafte Ausgestaltung des erfindungsgemäßen Verfahrens ist, dass mehrere simulierte konstante elektrische Signale nacheinander in bestimmten Zeitspannen ausgegeben werden. Die konstanten Signale unterscheiden sich in jeder bestimmten Zeitspanne um einen bestimmten Betrag von dem konstanten elektrischen Signal in der vorherigen Zeitspanne, beispielsweise um einen festen positiven Beitrag. Damit wird der standardisierte Messbereich der Messübertragungsstrecke in einem Rampenprofil abgedeckt. Das Rampenprofil ist dabei eine nicht stetige Signal-Zeit Funktion. Eine Variante sieht vor, den Messbereich durch eine streng monoton steigende Signal-Zeit Funktion abzudecken. Die Signal-Zeit Funktion kann zum Beispiel linear oder logarithmisch ist. Weitere mögliche Ausführungsformen für geeignete Signal-Zeit Funktionen, die den Messbereich abdecken, liegen der fachlich qualifizierten Person nahe.

Ein weiterer Vorteil der Erfindung ist, dass anhand des Simulationsmodus des Sensors über die analoge Messübertragungsstrecke zusätzliche Information über den Zustand des Sensors übertragen wird, welche innerhalb der Regel-/Auswerteeinheit des Sensors gewonnen wird, und in bekannten Verfahren nur über eine digitale Kommunikationsinfrastruktur oder mittels des HART Protokolls übertragen werden kann.

In einer vorteilhaften Ausgestaltung der Erfindung wird die Abweichung zwischen dem von der Regel-/Auswerteeinheit vorgegebenen analogen elektrischen Signal und dem an der Steuerungseinheit erfassten analogen elektrischen Signal gespeichert. Dies ermöglicht beispielsweise die automatische Erstellung eines Kalibrierprotokolls zur Kalibrierung der Messübertragungsstrecke. Alternativ wird der Wert nicht in der Steuerungseinheit selber, sondern in einer separaten und mit der Steuerungseinheit verbundenen Speichereinheit gespeichert.

In einer bevorzugten Weiterbildung der Erfindung kann der Simulationsmodus von der Regel-/Auswerteeinheit der Steuerungseinheit dadurch angezeigt werden, dass von der Regel-/Auswerteeinheit ein voreingestelltes Muster von analogen elektrischen Signalen auf die Messübertragungsstrecke ausgegeben wird. Die Signale stammen dabei aus einem fest definierten Wertebereich. Das voreingestellte Muster ist hierbei dadurch definiert, dass für definierte Zeitspannen Abfolgen von konstanten Strömen ausgegeben werden. Die Regel-/Auswerteeinheit des Sensors ist dabei so ausgestaltet, dass sie im Simulationsmodus das Muster ausgibt. Die Steuerungseinheit ist dabei so ausgestaltet, dass sie anhand des voreingestellten Musters von analogen elektrischen Signalen erkennt, dass der Sensor im Simulationsmodus betrieben wird.

In der Regel besitzen Messübertragungsstrecken, welche standardisierte Messbereiche verwenden, auch standardisierte Alarmgrenzen. Wird ein Signal an der Steuerungseinheit erfasst, welches kleiner als die untere standardisierte Alarmgrenze Sₘᵢₙ ist, wird also ein erster Alarm ausgelöst (Low Alarm). Wird ein Signal an der Steuerungseinheit erfasst, welches größer als die obere standardisierte Alarmgrenze Sₘₐₓ ist, wird also ein davon verschiedener zweiter Alarm ausgelöst (High Alarm). In einer vorteilhaften Ausgestaltung der Erfindung ist der Wertebereich der analogen elektrischen Signale, welcher zur Anzeige des Simulationsmodus verwendet wird, innerhalb des Bereichs [Sₘᵢₙ,Sₘₐₓ] bzw. innerhalb der Alarmgrenzen der Messübertragungsstrecke. Werden 4-20mA Ströme und die NAMUR Empfehlung NE43 verwendet, ist der Bereich zur Anzeige des Simulationsmodus in dieser vorteilhaften Ausgestaltung also das Intervall zwischen 3,8mA und 20,5mA.

In einer weiteren Ausgestaltung der Erfindung ist der Wertebereich der analogen elektrischen Signale, welcher zur Anzeige des Simulationsmodus verwendet wird, so gewählt, dass er keine Überschneidung mit dem Nutzbereich besitzt. Da der Nutzbereich eine echte Teilmenge des Messbereichs ist, kann der ungenutzte Bereich des Bereichs [Sₘᵢₙ,Sₘₐₓ] zur Anzeige des Simulationsmodus verwendet werden kann. In dieser vorteilhaften Ausgestaltung wird also genau der Bereich zur Anzeige des Simulationsmodus verwendet, der im Messmodus während der Messung der Prozessgröße nicht genutzt wird.

In einer vorteilhaften Weiterbildung des Verfahrens vollzieht die Regel-/Auswerteeinheit des Sensors während der Messung der Prozessgröße automatisch einen Wechsel in den Simulationsmodus. Die Bedingung dafür ist, dass zumindest eine sensitive Komponente einen bestimmten Wert annimmt. Es ist also möglich, einen oder mehrere Werte für die Prozessgröße vorzugeben, bei dem/denen der Sensor in den Simulationsmodus wechselt. Eine Variante ist, dass die Bedingung für den Wechsel in den Simulationsmodus durch eine Kombination der Messwerte von mehreren sensitiven Komponenten definiert wird. Der/Die bestimmte/bestimmten Wert/Werte, bei dem/denen ein Wechsel in den Simulationsmodus ausgelöst wird, ist/sind dabei beispielsweise vom Anwender anhand eines oder mehrerer Parameter einstellbar.

Gemäß einer vorteilhaften Ausgestaltung der Erfindung ist die Regel-/Auswerteinheit in der Lage, im Simulationsmodus eine Gutmeldung, eine Warnungsmeldung und/oder eine Fehlermeldung über den Zustand des Sensors zu erstellen und über die Messübertragungsstrecke zu übertragen. Die Gutmeldung wird anhand eines ersten voreingestellten Musters von analogen elektrischen Signalen ausgegeben. Die Warnungsmeldung wird anhand eines zweiten, vom ersten Muster verschiedenen Musters von analogen elektrischen Signalen ausgegeben. Die Fehlermeldung wird anhand eines vom ersten und zweiten Muster verschiedenen, dritten voreingestellten Muster von analogen elektrischen Signalen ausgegeben. Die Gutmeldung, Warnungsmeldung und/oder Fehlermeldung wird über die Messübertragungsstrecke übermittelt. Die Steuerungseinheit erkennt anhand der empfangenen, voreingestellten und voneinander unterscheidbaren Muster, ob es sich um ein Gutmeldung, eine Warnungsmeldung, und/oder eine Fehlermeldung handelt. Der Bereich zur Anzeige der Gut- und Warnungsmeldung liegt dabei gerade innerhalb der Alarmgrenzen bzw. innerhalb des Wertebereichs [Sₘᵢₙ,Sₘₐₓ]. Die analogen elektrischen Signale zur Anzeige der Fehlermeldung liegen außerhalb [Sₘᵢₙ,Sₘₐₓ]. Die Gut- und/oder Warnungsmeldung kann dann in der Steuerungseinheit gespeichert werden bzw. in einer separaten, mit der Steuerungseinheit verbundenen Speichereinheit gespeichert werden.

In dieser vorteilhaften Ausgestaltung kann also im Simulationsmodus qualitative, den Sensor betreffende Information von der Regel-/Auswerteeinheit zur Steuerungseinheit übertragen werden. Die vorliegende Erfindung erlaubt die Übertragung zusätzlicher Information über die analoge Messübertragungsstrecke, ohne dafür eine HART Schnittstelle zu benötigen.

Es ist weiterhin zu bedenken, dass die mindestens eine sensitive Komponente des Sensors ihren Messwert auch im Simulationsmodus der Regel-/Auswerteeinheit übermittelt. Zwar übermittelt die Regel-/Auswerteeinheit im Simulationsmodus den Messwert nicht mehr über die Messübertragungsstrecke an die Steuerungseinheit weiter. Die Regel-/Auswerteeinheit ist aber auch im Simulationsmodus in der Lage, eine Fehlermeldung auszulösen, falls die Messgrößen einer oder mehrerer sensitiver Komponenten des Sensors kritische Werte für die Prozessgröße über- und/oder unterschreitet. Diese kritischen Werte sind innerhalb der Regel-/Auswerteeinheit festlegt. Das erfindungsgemäße Verfahren ermöglicht also beispielsweise, gleichzeitig eine Gutmeldung zu übertragen und parallel weiterhin die Prozessgröße zu überwachen, so dass auch im Simulationsmodus eine Warnungs- oder Fehlermeldung in der Regel-/Auswerteeinheit generiert wird. Es ist beispielsweise also möglich, eine Kalibrierung der Messübertragungsstrecke auszulösen, falls die temperatursensitive Komponente eine Temperatur von 120° C misst, und gleichzeitig während der Kalibrierung der Messübertragungsstrecke von der Regel-/Auswerteeinheit überwachen zu lassen, dass die Temperatur von 120°C immer überschritten oder unterschritten ist. Die lückenlose Einhaltung einer Überwachungstemperatur ist für die hygienischen Anforderungen im Lebensmittel- und/oder Pharmaziebereich von großer Bedeutung. Das Verfahren der vorliegenden Anmeldung ermöglicht auch im Simulationsmodus eine lückenlose Überwachung der Temperatur.

Eine Fehlermeldung des Sensors kann nur durch einen manuellen Eingriff am Sensor und/oder der Messübertragungsstrecke behoben werden. Im Gegensatz dazu sieht eine Weiterbildung der Erfindung vor, dass der Sensor nach Ausgabe einer Gut- und/oder Warnungsmeldung wieder selbständig in den Messmodus versetzt wird.

Der Wechsel vom Betrieb des Sensors im Messmodus zum Betrieb des Sensor im Simulationsmodus zur in-situ Kalibrierung der Messübertragungsstrecke, sowie der Rückwechsel vom Betrieb des Sensors im Simulationsmodus zum Betrieb des Sensors im Messmodus kann in der vorliegenden Erfindung also komplett automatisch erfolgen. Der Wechsel in den Simulationsmodus kann dadurch ausgelöst werden, dass zumindest eine sensitive Komponente einen Wert annimmt, und der Rückwechsel in den Messmodus folgt nach der Gut- und/oder Warnungsmeldung selbständig.

Zusätzlich dazu sieht eine weitere Weiterbildung vor, dass der Wechsel in den Simulationsmodus auch manuell erfolgen kann. Beispielsweise kann eine Spannungsunterbrechung den Wechsel in den Simulationsmodus und die in-situ Kalibrierung der Messübertragungsstrecke veranlassen. Da bei der Inbetriebnahme des Sensors eine Spannungsunterbrechung erfolgt, stellt dies eine besonders vorteilhaft Weiterbildung dar, da somit die Kalibrierung der Messübertragungsstrecke einen Teil der Routine zur Inbetriebnahme des Sensors darstellt. Andere Möglichkeiten eines manuellen Eingriffs zum Wechsel in den Simulationsmodus sind das Auslösen eines am Sensor befindlichen Schalters.

Weiter ist eine kontaktlose Auslösung möglich, welche von außerhalb durch einen Magneten betätigt wird, beispielsweise durch ein Reed Relais oder eine Hall Sonde im Sensor. Eine weitere Möglichkeit für eine kontaktlose Auslösung besteht weiter durch eine kurzreichweitige Funkverbindung mit dem Sensor, beispielsweise im Infrarotbereich, durch Bluetooth, oder durch Near-Field-Communication. Andere derartige manuelle kontaktlose Auslösungen liegen dem Fachmann nahe. Dabei muss der Sensor so ausgestaltet sein, dass er ein zusätzliches, zur kontaktlosen Auslösung befähigtes Gerät aufweist.

Das erfindungsgemäße Verfahren sieht damit also auch vor, dass der Anwender des Sensors bestimmen kann, ob der Wechsel in den Simulationsmodus automatisch oder durch einen manuellen Eingriff erfolgt.

Ferner beinhaltet die Erfindung eine Vorrichtung zur in-situ Kalibrierung einer analogen Messübertragungsstrecke während der Bestimmung und/oder Überwachung einer Prozessgröße eines Mediums, wobei die Vorrichtung zur Durchführung des Verfahrens ausgestaltet ist. Die Vorrichtung weist einen Sensor und eine Steuerungseinheit auf, wobei der Sensor mindestens eine sensitive Komponente und eine Regel-/Auswerteeinheit besitzt, und wobei die Regel-/Auswerteeinheit über die Messübertragungsstrecke mit der Steuerungseinheit verbunden ist.

In einer besonders vorteilhaften Ausgestaltung der Vorrichtung handelt es sich bei dem Sensor um ein Thermometer, wobei der Sensor eine temperatursensitive Komponente und ein Referenzelement aufweist, welches bei zumindest einem vorgegeben Temperaturpunkt eine Phasenumwandlung erfährt. Die Regel-/Auswerteeinheit kalibriert bei dem festen Temperaturpunkt die temperatursensitive Komponente anhand des Referenzelements, indem die Abweichung der ersten temperatursensitiven Komponente von dem durch das Referenzelement vorgegebenen Temperaturpunkt bestimmt wird. Ein derartiges in-situ kalibrierendes Thermometer ist in der DE 10 2010 040 039 offenbart. In dieser besonders vorteilhaften Ausgestaltung der Erfindung verursacht die Regel-/Auswerteeinheit einen Wechsel vom Messmodus in den Simulationsmodus, wenn der vorgegebene Temperaturpunkt durchlaufen wird.

Wird ein in-situ kalibrierendes Thermometer zusammen mit einer analogen Messübertragungsstrecke betrieben, muss die Messübertragungsstrecke im Langzeitbetrieb auch in regelmäßigen Intervallen kalibriert werden. Zur Kalibrierung der Messübertragungsstrecke muss das Thermometer dann wieder ausgebaut werden muss. Der technische Vorteil eines sich selbst kalibrierenden und validierenden Thermometers wäre bei der Verwendung einer analogen Messübertragungsstrecke damit wieder teilweise aufgehoben. Die vorliegende Anmeldung erlaubt also, sowohl eine in-situ Kalibrierung des Thermometers als auch eine in-situ Kalibrierung der analogen Messübertragungsstrecke durchzuführen. In dieser vorteilhaften Ausgestaltung der Vorrichtung ermöglicht die vorliegende Erfindung damit, alle technischen Vorteile des in-situ kalibrierenden Thermometers auch dann vollständig zu realisieren, selbst wenn die dafür vorgesehene digitale Kommunikationsinfrastruktur oder HART Schnittstelle nicht vorhanden ist.

Insbesondere kann in dieser besonders vorteilhaften Ausgestaltung der Simulationsmodus dazu genutzt werden, die bei der Kalibrierung der temperatursensitiven Komponente des Sensors gewonnene Information über die analoge Messübertragungsstrecke zu übertragen. Dabei wird in einer Weiterbildung im Simulationsmodus von der Regel-/Auswerteeinheit für eine festgelegte Zeit ein konstantes elektrisches Signal ausgegeben, welches der Abweichung der temperatursensitiven Komponente von dem durch das Referenzelement vorgegebenen Temperaturpunkt entspricht.

Der Anwender kann dabei, beispielsweise anhand eines Parameters bei Inbetriebnahme des Sensors, ein bestimmtes konstantes elektrisches Signal festlegen, bei dem die Abweichung der temperatursensitiven Komponente von dem durch das Referenzelement vorgegebenen Temperaturpunkt angezeigt wird. Die Steuerungseinheit erkennt somit anhand der Abweichung des von der Regel-/Auswerteeinheit ausgegebenen konstanten elektrischen Signals von dem festgelegten analogen elektrischen Signal sowie anhand der Parametrierung der Messübertragungsstrecke die Abweichung der temperatursensitiven Komponente von dem durch das Referenzelement vorgegebenen Temperaturpunkt.

Gemäß einer vorteilhaften Weiterbildung der erfindungsgemäßen Vorrichtung wird auch die Abweichung der temperatursensitiven Komponente von dem durch das Referenzelement vorgegebenen Temperaturpunkt nach der Übertragung über die Messübertragungsstrecke in der Steuerungseinheit gespeichert. Alternativ kann die Abweichung auch in einer separaten, mit der Steuerungseinheit verbundenen Speichereinheit gespeichert werden. Diese Weiterbildung ermöglicht auch die automatische Erstellung eines Kalibrierprotokolls zur Kalibrierung des Sensors. Dies beinhaltet auch ein gemeinsames Kalibrierprotokoll, welches die Kalibrierinformation für den Sensor und für die Messübertragungsstrecke enthält.

Im Gegensatz zu der in der DE 10 2010 040 039 beschriebenen Vorrichtung weist die Vorrichtung der Offenbarung DE 10 2009 058 282 einen Sensor mit zwei temperatursensitiven Komponenten auf, wobei die beiden temperatursensitiven Komponente kalibriert werden. Auch hier kann der Simulationsmodus des Sensors in einer zu der oben beschriebenen Vorrichtung naheliegenden Art und Weise verwendet werden. Insbesondere kann die Regel-/Auswerteeinheit des Sensors eine Drift der beiden temperatursensitiven Komponenten über die analoge Messübertragungsstrecke übertragen.

Im gleichen Maße lässt sich die Erfindung in naheliegender Weise auf weitere Sensoren verallgemeinern, die andere Prozessgrößen als die Temperatur messen. Erfolgt eine in-situ Kalibrierung des Sensors (beispielsweise durch die Verwendung mehrerer sensitiver Komponenten) und wird eine analoge Messübertragungsstrecke verwendet, so kann die vorliegende Erfindung mutatis mutandis auch auf derartige Vorrichtungen angewendet werden.

Die Erfindung wird anhand der nachfolgenden Figuren näher erläutert. Es zeigt:
Fig. 1: eine schematische Darstellung gemäß einer Ausgestaltung der erfindungsgemäßen Vorrichtung.
Fig. 2: ein Rampenprofil, das zur Kalibrierung der Messübertragungsstrecke verwendet werden kann
Fig. 3: die verschiedenen Signalbereiche des analogen elektrischen Signals.

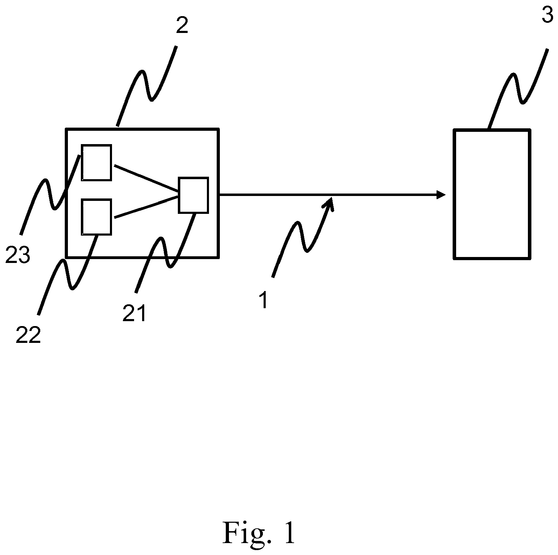

Fig. 1 zeigt die schematische Anordnung des Sensors 2, der Messübertragungsstrecke 1 und Steuerungseinheit 3, sowie die unterschiedlichen Sensorkomponenten. Der Sensor enthält dabei mindestens eine sensitive Komponente 22 und eine Regel-/Auswerteeinheit 21. Die Signalrichtung des analogen elektrischen Signals ist von der Regel-/Auswerteeinheit 21 über die Messübertragungsstrecke 1 zu der Steuerungseinheit 3 gerichtet.

In einer besonders bevorzugten Ausführung besteht die sensitive Komponente 22 aus einem Temperatursensor. Ein Referenzelement 23 wird zur Kalibrierung der ersten temperatursensitiven Komponente 22 benutzt. Die Kalibrierung des Sensors erfolgt an einem festen Temperaturpunkt, bei dem das Referenzelement 23 einen Phasenübergang erfährt. In diesem Ausführungsbeispiel kann dann der Simulationsmodus zur Kalibrierung der Messübertragungsstrecke 1 bevorzugt dadurch ausgelöst werden, dass der feste Temperaturpunkt zur Kalibrierung des Sensors 2 durchlaufen wurde. Es werden dann also hintereinander sowohl der Sensor 2, als auch die analoge Messübertragungsstrecke 1 kalibriert. Anschließend können die bei der Kalibrierung festgestellten Informationen jeweils für den Sensor 2 und die Messübertragungsstrecke 1 übertragen werden und in einzelnen und/oder gemeinsamen, automatisch erstellten Kalibrierprotokollen dokumentiert werden.

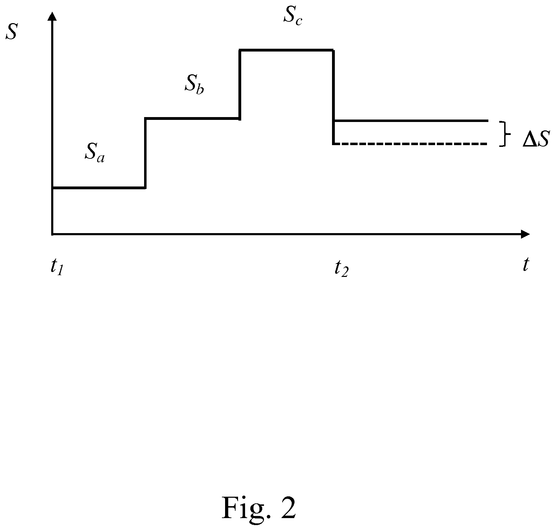

Fig. 2 zeigt ein Rampenprofil, wie es im Simulationsmodus zur Kalibration der Messübertragungsstrecke 1 in der Zeitspanne zwischen t₁ und t₂ verwendet werden könnte. Der Messbereich 5 wird dabei von Sₐ und S_{c} aufgespannt. Das Rampenprofil tastet den gesamten Messbereich 5 ab. Dies geschieht in dem gezeigten Beispiel dadurch, dass für definierte Zeitspannen jeweils hintereinander konstante Signale Sₐ, S_{b} und S_{c} von der Regel-/Auswerteinheit 21 ausgegeben werden, wobei Sₐ kleiner als S_{b} und S_{b} kleiner als S_{c} ist. Da die Steuerungseinheit 3 so ausgestaltet ist, dass ihr das von der Regel-/Auswerteinheit 21 ausgegebene Profil bekannt ist, kann die Steuerungseinheit 3 die Messübertragungsstrecke kalibrieren. In einer Variante werden alle nachfolgenden Signale noch entsprechend nachkorrigiert

Wird die bevorzugte Ausgestaltung der Erfindung mit einer temperatursensitiven Komponenten 22 und einem Referenzelement 23 ausgeführt, gibt die Regel-/Auswerteeinheit 21 anschließend noch die Abweichung der ersten temperatursensitiven Komponente von dem durch das Referenzelement 23 vorgegebenen Temperaturpunkt aus. Dabei ist festgelegt, bei welchem Signal die Abweichung ausgegeben werden soll (gestrichelte Linie). Dieses festgelegte Signal kann dabei vom Anwender eingestellt werden. Eine Möglichkeit ist dabei, das Signal, an dem die Abweichung ausgegeben wird, bei Inbetriebnahme des Sensors einzustellen. Der Anwender kann dafür zum Beispiel einen Parameter auf einen bestimmen Wert festsetzen. Die Steuerungseinheit kann die Abweichung ΔS bestimmen und diese anhand der Parametrierung und der Kalibrierung der Messübertragungsstrecke anschließend in eine Temperaturdifferenz umrechnen. Die Temperaturdifferenz kann dann gespeichert und/oder in einem Kalibrierprotokoll hinterlegt werden.

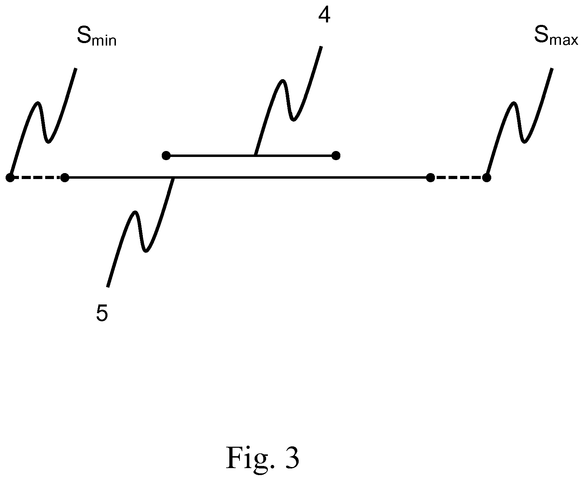

Fig. 3 zeigt die relevanten Signalbereiche des analogen elektrischen Signals und ihre Lage zueinander. Der Messbereich 5 ist in der Regel ein standardisierter Messbereich 5. Handelt es sich beim analogen elektrischen Signal um einen Strom, wird bevorzugt der standardisierte Bereich von 4-20mA benutzt. Außerhalb des Messbereichs 5 liegen die standardisierten Alarmgrenzen Sₘᵢₙ=3,8mA und Sₘₐₓ=20,5mA. Die Steuerungseinheit 3 löst einen ersten Alarm aus, wenn sie einen Strom erfasst, dessen Wert kleiner als 3,8mA ist, und einen vom ersten Alarm verschiedenen zweiten Alarm, wenn sie einen Strom erfasst, dessen Wert größer als 20,5mA ist. In einer Ausgestaltung der Erfindung kann der Bereich zwischen 3,8mA und 20,5mA zur Anzeige des Simulationsmodus genutzt werden.

Der Nutzbereich 4 ist im Messbereich enthalten. Der Nutzbereich ist dabei so gewählt, dass erden im Prozess maximal und minimal angenommen Prozessgrößen entspricht. Er ist eine echte Teilmenge des Messbereichs. Das bedeutet, dass es im Messbereich immer ungenutzte Bereiche gibt. Beispielsweise parametriert der standardisierte Strombereich von 4-20mA das Temperaturintervall von 50-180°C, in der Anwendung werden aber nur minimale Temperaturen von 80°C und maximale Temperaturen von 150°C erreicht. Daher gibt es einen im Messbereich enthaltenen ungenutzten Signalbereich. Insbesondere ist der ungenutzte Signalbereich ein erster Signalbereich, der der Temperatur zwischen 50-80°C entspricht, und ein zweiter Signalbereich, der der Temperatur zwischen 150-180°C entspricht. Dieser ungenutzte Signalbereich kann in der vorliegenden Anwendung bevorzugt zur Anzeige des Simulationsmodus genutzt werden. In bevorzugter Weise wird dabei die untere Schranke des ersten ungenutzten (unteren) Signalbereichs noch auf 3,8mA erweitert, und die obere Schranke des zweiten ungenutzten (oberen) Signalbereichs wird auf 20,5mA erweitert. Das Muster von Signalen zur Anzeige des Simulationsmodus ist dann bevorzugt so gewählt, dass abwechselnd Werte aus dem unteren und dem oberen ungenutzten Bereich von der Regel-/Auswerteeinheit ausgegeben werden. Die Idee ist hierbei, den Simulationsmodus dadurch eindeutig zu erkennen, dass eine Signalabfolge von der Regel-/Auswerteeinheit ausgegeben wird, die im Messmodus mit verschwindender Wahrscheinlichkeit vorkommt.

### Bezugszeichenliste

- 1: Messübertragungsstrecke
- 2: Sensor
- 21: Regel-/Auswerteeinheit
- 22: erste sensitive Komponente
- 23: Referenzelement
- 3: Steuerungseinheit
- 4: Nutzbereich
- 5: Messbereich
- Sₘᵢₙ: minimales analoges elektrisches Signal
- Sₘₐₓ: maximales analoges elektrisches Signal
- ΔS: analoges elektrische Signal, welches der Abweichung der ersten temperatursensitiven Komponente von dem durch das Referenzelement vorgegebenen Temperaturpunkt entspricht

## Patentansprüche

1. Verfahren zur in-situ Kalibrierung einer analogen Messübertragungsstrecke (1) während der Bestimmung und/oder Überwachung einer Prozessgröße eines Mediums, wobei über die Messübertragungsstrecke (1) analoge elektrische Signale von einer Regel-/Auswerteeinheit (21) zu einer Steuerungseinheit (3) übertragen werden,
wobei die Regel-/Auswerteeinheit (21) einem Sensor (2) zugeordnet ist, der die Prozessgröße anhand mindestens einer für die Prozessgröße sensitiven Komponente (22) bestimmt und/oder überwacht,
wobei der Sensor (2) entweder in einem Messmodus oder in einem Simulationsmodus betrieben wird,
wobei im Messmodus die Regel-/Auswerteeinheit (21) die Messwerte der mindestens einen sensitiven Komponente (22) des Sensors (2) in ein die Prozessgröße repräsentierendes analoges elektrisches Signal umwandelt,
wobei im Simulationsmodus die Regel-/Auswerteeinheit (21) für eine festgelegte Zeitspanne zumindest ein eindeutig als simuliert erkennbares analoges elektrisches Signal ausgibt, das von der Steuerungseinheit (3) erkannt und erfasst wird,
und wobei im Simulationsmodus die Kalibrierung der Messübertragungsstrecke (1) vorgenommen wird, indem die Steuerungseinheit (3) die Abweichung zwischen dem von der Regel-/Auswerteeinheit (21) vorgegebenen analogen elektrischen Signal und dem erfassten analogen elektrischen Signal bestimmt.

2. Verfahren nach Anspruch 1,
wobei im Simulationsmodus die Abweichung zwischen dem von der Regel-/Auswerteeinheit (21) vorgegebenen analogen elektrischen Signal und dem an der Steuerungseinheit (3) erfassten analogen elektrischen Signal gespeichert wird.

3. Verfahren nach Anspruch 1 oder 2,
wobei im Simulationsmodus die Regel-/Auswerteeinheit (21) ein voreingestelltes Muster von analogen elektrischen Signalen aus einem fest definierten Wertebereich ausgibt, und wobei die Steuerungseinheit (3) anhand des voreingestellten Musters von analogen elektrischen Signalen erkennt, dass der Sensor (2) im Simulationsmodus betrieben wird.

4. Verfahren nach zumindest einem der vorherigen Ansprüche,
wobei die Steuerungseinheit (3) einen ersten Alarm auslöst, falls sie ein Signal erfasst, dessen Wert kleiner als ein minimales analoges elektrisches Signal Sₘᵢₙ ist,
wobei die Steuerungseinheit (3) einen vom ersten Alarm verschiedenen zweiten Alarm auslöst, falls sie ein Signal erfasst, dessen Wert größer als ein maximales analoges elektrisches Signal Sₘₐₓ ist.

5. Verfahren nach Anspruch 3 und 4,
wobei der fest definierte Wertebereich, welcher von der Regel-/Auswerteeinheit (21) zur Anzeige des Simulationsmodus genutzt wird, innerhalb des Bereichs [Sₘᵢₙ,Sₘₐₓ] liegt.

6. Verfahren nach Anspruch 4 und 5,
wobei die im Messmodus ausgegebenen analogen elektrischen Signale aus einem als Nutzbereich (4) bezeichneten Wertebereich stammen,
wobei der Nutzbereich (4) so parametriert ist, dass er den im Prozess maximal und minimal angenommen Prozessgrößen entspricht,
wobei der Nutzbereich (4) eine echte Teilmenge von [Sₘᵢₙ,Sₘₐₓ] ist,
und wobei der Wertebereich, welcher von der Regel-/Auswerteeinheit (21) zur Anzeige des Simulationsmodus genutzt wird, keine Überschneidung mit dem Nutzbereich (4) besitzt.

7. Verfahren nach zumindest einem der vorherigen Ansprüche,
wobei ein Wechsel in den Simulationsmodus verursacht wird, wenn zumindest eine sensitive Komponente (22) des Sensors (2) mindestens einen festgelegten Wert annimmt.

8. Verfahren nach zumindest einem der vorherigen Ansprüche,
wobei im Simulationsmodus eine Gutmeldung, eine Warnungsmeldung und/oder eine Fehlermeldung über den Zustand des Sensors (2) ausgegeben wird,
wobei die Regel-/Auswerteeinheit (21) im Falle einer Gutmeldung ein erstes voreingestelltes Muster von analogen elektrischen Signalen ausgibt,
wobei die Regel-/Auswerteeinheit (21) im Falle einer Warnungsmeldung ein vom ersten Muster verschiedenes zweites voreingestelltes Muster von analogen elektrischen Signalen ausgibt,
wobei die Regel-/Auswerteeinheit (21) im Falle einer Fehlermeldung ein vom ersten und zweiten Muster verschiedenes drittes voreingestelltes Muster von analogen elektrischen Signalen ausgibt,
wobei die analogen elektrischen Signale zur Anzeige der Gut- und Warnungsmeldung im Wertebereich [Sₘᵢₙ,Sₘₐₓ] liegen,
und wobei die analogen elektrischen Signale zur Anzeige der Fehlermeldung außerhalb [Sₘᵢₙ,Sₘₐₓ] liegen,
und wobei die Gut- und/oder Warnungsmeldung gespeichert wird.

9. Verfahren nach Anspruch 8,
wobei der Sensor (2) nach der Ausgabe von Gut- und/oder Warnungsmeldung wieder in den Messmodus versetzt wird.

10. Verfahren nach zumindest einem der vorherigen Ansprüche,
wobei ein Wechsel in den Simulationsmodus manuell ausgelöst wird, vorzugsweise durch eine Spannungsunterbrechung des Sensors (2), durch die Betätigung eines Magnetschalters, und/oder durch Near Field Communication.

11. Vorrichtung zur in-situ Kalibrierung einer analogen Messübertragungsstrecke (1) während der Bestimmung und/oder Überwachung einer Prozessgröße eines Mediums, wobei die Vorrichtung zur Durchführung des Verfahrens nach zumindest einem der Ansprüche 1-10 ausgestaltet ist,
mit einem Sensor (2) und einer Steuerungseinheit,
wobei der Sensor (2) mindestens eine sensitive Komponente (22) und eine Regel-/Auswerteeinheit (21) aufweist,
und wobei die Regel-/Auswerteeinheit (21) über die Messübertragungsstrecke (1) mit der Steuerungseinheit (3) verbunden ist.

12. Vorrichtung nach Anspruch 11,
wobei der Sensor (2) eine temperatursensitive Komponente (22) und ein Referenzelement (23) aufweist, welches bei zumindest einem vorgegeben Temperaturpunkt eine Phasenumwandlung erfährt,
wobei die Regel-/Auswerteeinheit (21) bei dem festen Temperaturpunkt die temperatursensitive Komponente (22) anhand des Referenzelements (23) kalibriert und die Abweichung der temperatursensitiven Komponente (22) von dem durch das Referenzelement (23) vorgegebenen Temperaturpunkt bestimmt,
und wobei die Regel-/Auswerteeinheit (21) einen Wechsel vom Messmodus in den Simulationsmodus verursacht, wenn das Referenzelement (23) den vorgegebenen Temperaturpunkt durchläuft

13. Vorrichtung nach Anspruch 12,
wobei die Regel-/Auswerteeinheit (21) im Simulationsmodus nach der Kalibrierung der temperatursensitiven Komponente (22) und der Messübertragungsstrecke (1) für eine festgelegte Zeit ein konstantes analoges elektrisches Signal ausgibt, welches der Abweichung der temperatursensitiven Komponente (22) von dem durch das Referenzelement (23) vorgegebenen Temperaturpunkt entspricht,
wobei die Steuerungseinheit (3) anhand der Abweichung ΔS des von der Regel-/Auswerteeinheit (21) ausgegebenen konstanten elektrischen Signals von einem festgelegten analogen elektrischen Signal und anhand der Parametrierung der Messübertragungsstrecke (1) die Abweichung der temperatursensitiven Komponente (22) von dem durch das Referenzelement (23) vorgegebenen Temperaturpunkt erkennt.

14. Vorrichtung nach Anspruch 13,
wobei die Steuerungseinheit (3) im Simulationsmodus die Abweichung der temperatursensitiven Komponente (22) von dem durch das Referenzelement (23) vorgegebenen Temperaturpunkt speichert.

15. Vorrichtung nach Anspruch 13 oder 14,
wobei die Regel-/Auswerteeinheit (21) eine Gutmeldung erzeugt,
falls die Abweichung der temperatursensitiven Komponente (22) von dem durch das Referenzelement (23) vorgegebenen Temperaturpunkt einen festgelegten Grenzwert unterschreitet,
und wobei die Regel-/Auswerteeinheit (21) eine Warnungsmeldung erzeugt,
falls die Abweichung der temperatursensitiven Komponente (22) von dem durch das Referenzelement (23) vorgegebenen Temperaturpunkt einen festgelegten Grenzwert überschreitet.

## Claims

1. Procedure for the in-situ calibration of an analog measuring transmission section (1) during the determination and/or monitoring of a process variable of a medium,
wherein analog electrical signals are transmitted from a control/evaluation unit (21) to a control unit (3) via the measuring transmission section (1),
wherein the control/evaluation unit (21) is assigned a sensor (2), which determines and/or monitors the process variable using at least one component (22) which is sensitive to the process variable,
wherein the sensor (2) is operated either in a measuring mode or in a simulation mode,
wherein, in the measuring mode, the control/evaluation unit (21) converts the measured values of the at least one component (22) which is sensitive to the process variable into an analog electrical signal that represents the process variable,
wherein, in the simulation mode, the control/evaluation unit (21) outputs at least one analog electrical signal, which is clearly identified as simulated, for a defined period of time, said signal being detected and measured by the control unit (3), and wherein, in the simulation mode, the measuring transmission section (1) is calibrated by the control unit (3) determining the deviation between the analog electrical signal predefined by the control/evaluation unit (21) and the measured analog electrical signal.

2. Procedure as claimed in Claim 1,
wherein, in the simulation mode, the deviation between the analog electrical signal predefined by the control/evaluation unit (21) and the analog electrical signal measured at the control unit (3) is saved.

3. Procedure as claimed in Claim 1 or 2,
wherein, in the simulation mode, the control/evaluation unit (21) outputs a predefined pattern of analog electrical signals from a fixed value range, and wherein the control unit (3) detects that the sensor (2) is being operated in the simulation mode on the basis of the preset pattern of analog electrical signals.

4. Procedure as claimed in at least one of the previous claims,
wherein the control unit (3) triggers a first alarm if it detects a signal whose value is less than a minimum analog electrical signal Sₘᵢₙ,
wherein the control unit (3) triggers a second alarm that differs from the first alarm if it detects a signal whose value is greater than a maximum analog electrical signal Sₘₐₓ.

5. Procedure as claimed in Claim 3 and 4,
wherein the fixed value range, which is used by the control/evaluation unit (21) to indicate the simulation mode, is located in the range [Sₘᵢₙ, Sₘₐₓ].

6. Procedure as claimed in Claim 4 and 5,
wherein the analog electrical signals output in the measuring mode come from a value range known as the useful range (4),
wherein the useful range (4) is configured in such a way that it corresponds to the process variables taken to be the maximum and minimum in the process, wherein the useful range (4) is a real subsection of [Sₘᵢₙ, Sₘₐₓ],
and wherein the value range which is used by the control/evaluation unit (21) to indicate the simulation mode does not overlap with the useful range (4).

7. Procedure as claimed in at least one of the previous claims,
wherein a change to the simulation mode is caused if at least one sensitive component (22) of the sensor (2) adopts at least one defined value.

8. Procedure as claimed in at least one of the previous claims,
wherein, in the simulation mode, an OK message, a warning message and/or an error message regarding the condition of the sensor (2) is output, wherein, in the event of an OK message, the control/evaluation unit (21) outputs a first predefined pattern of analog electrical signals,
wherein, in the event of a warning message, the control/evaluation unit (21) outputs a second predefined pattern of analog electrical signals that is different from the first pattern,
wherein, in the event of an error message, the control/evaluation unit (21) outputs a third predefined pattern of analog electrical signals that is different from the first and second pattern,
wherein the analog electrical signals to indicate the OK and warning message are in the value range [Sₘᵢₙ, Sₘₐₓ],
and wherein the analog electrical signals to indicate the error message are outside the range [Sₘᵢₙ, Sₘₐₓ],
and wherein the OK message and/or the warning message is/are saved.

9. Procedure as claimed in Claim 8,
wherein the sensor (2) returns to the measuring mode after outputting an OK or warning message.

10. Procedure as claimed in one of the previous claims,
wherein a change to the simulation mode is triggered manually, preferably by an interruption in the power to the sensor (2), by activating a solenoid switch and/or by near field communication.

11. Apparatus for the in-situ calibration of an analog measuring transmission section (1) during the determination and/or monitoring of a process variable of a medium,
wherein the apparatus is designed to perform the procedure as claimed in at least one of the Claims 1 to 10
with a sensor (2) and a control unit,
wherein the sensor (2) has at least a sensitive component (22) and a control/evaluation unit (21),
and wherein the control/evaluation unit (21) is connected to the control unit (3) via the measuring transmission section (1).

12. Apparatus as claimed in Claim 11,
wherein the sensor (2) has a temperature-sensitive component (22) and a reference element (23), which experiences a phase transition at the level of at least one predefined temperature point,
wherein, at the fixed temperature point, the control/evaluation unit (21) calibrates the temperature-sensitive component (22) using the reference element (23) and determines the deviation of the temperature-sensitive component (22) from the temperature point predefined by the reference element (23),
and wherein the control/evaluation unit (21) causes a change from the measuring mode to the simulation mode when the reference element (23) goes through the predefined temperature point.

13. Apparatus as claimed in Claim 12,
wherein, in the simulation mode, the control/evaluation unit (21) outputs a constant analog electrical signal for a defined period of time following the calibration of the temperature-sensitive component (22) and the measuring transmission section (1), said signal corresponding to the deviation of the temperature-sensitive component (22) from the temperature point defined by the reference element (23);
wherein the control unit (3) uses the deviation ΔS of the constant electrical signal, which is output by the control/evaluation unit (21), from a defined analog electrical signal and uses the parameterization of the measuring transmission section (1) to detect the deviation of the temperature-sensitive component (22) from the temperature point defined by the reference element (23).

14. Apparatus as claimed in Claim 13,
wherein, in the simulation mode, the control unit (3) saves the deviation of the temperature-sensitive component (22) from the temperature point defined by the reference element (23).

15. Apparatus as claimed in Claim 13 or 14,
wherein the control/evaluation unit (21) generates an OK message if the deviation of the temperature-sensitive component (22) from the temperature point defined by the reference element (23) is below a defined limit value,
and wherein the control/evaluation unit (21) generates a warning message if the deviation of the temperature-sensitive component (22) from the temperature point defined by the reference element (23) exceeds a defined limit value.

## Revendications

1. Procédé destiné à l'étalonnage in-situ d'une section de transmission de mesure analogique (1) pendant la détermination et/ou la surveillance d'une grandeur process dans un produit, des signaux électriques analogiques étant transmis, via la section de transmission de mesure (1), d'une unité de régulation / d'exploitation (21) vers une unité de commande (3),
l'unité de régulation / d'exploitation (21) étant attribuée à un capteur (2), qui détermine et/ou surveille la grandeur de process au moyen d'au moins un composant sensible (22) à la grandeur de process,
le capteur (2) étant utilisé soit dans un mode de mesure, soit dans un mode de simulation,
procédé pour lequel, en mode de mesure, l'unité de régulation / d'exploitation (21) convertit les valeurs mesurées de l'au moins un composant sensible (22) du capteur (2) en un signal électrique analogique représentant la grandeur de process,
procédé pour lequel, en mode de simulation, l'unité de régulation / d'exploitation (21) émet pendant un intervalle de temps défini au moins un signal électrique analogique clairement identifiable comme étant simulé, lequel signal est détecté et mesuré par l'unité de commande (3),
et procédé pour lequel, en mode de simulation, l'étalonnage de la section de transmission de mesure (1) est effectué en ce que l'unité de commande (3) détermine l'écart entre le signal électrique analogique prédéfini par l'unité de régulation / d'exploitation (21) et le signal électrique analogique mesuré.

2. Procédé selon la revendication 1,
pour lequel, en mode de simulation, l'écart entre le signal électrique analogique prédéfini par l'unité de régulation / d'exploitation (21) et le signal électrique analogique mesuré sur l'unité de commande (3) est enregistré.

3. Procédé selon la revendication 1 ou 2,
pour lequel, en mode de simulation, l'unité de régulation / d'exploitation (21) émet un échantillon préréglé de signaux électriques analogiques à partir d'une gamme de valeurs définie de façon fixe, et pour lequel l'unité de commande (3) détecte, au moyen de l'échantillon préréglé de signaux électriques analogiques, que le capteur (2) est utilisé en mode de simulation.

4. Procédé selon au moins l'une des revendications précédentes,
pour lequel l'unité de commande (3) déclenche une première alarme dans le cas où elle détecte un signal dont la valeur est inférieure à un signal électrique analogique minimal Sₘᵢₙ,
pour lequel l'unité de commande (3) déclenche une deuxième alarme différente de la première alarme dans le cas où elle détecte un signal dont la valeur est supérieure à un signal électrique analogique maximal Sₘₐₓ.

5. Procédé selon la revendication 3 et 4,
pour lequel la gamme de valeurs définie de façon fixe, laquelle est utilisée par l'unité de régulation / d'exploitation (21) pour l'affichage du mode de simulation, se situe à l'intérieur de la gamme [Sₘᵢₙ, Sₘₐₓ].

6. Procédé selon la revendication 4 et 5,
pour lequel les signaux électriques analogiques émis en mode de mesure proviennent d'une gamme de valeurs appelée gamme utile (4),
la gamme utile (4) étant paramétrée de telle sorte à ce qu'elle corresponde aux grandeurs de process maximales et minimales prises en compte dans le process, la gamme utile (4) étant un sous-ensemble réel de [Sₘᵢₙ, Sₘₐₓ],
et la gamme de valeurs, qui est utilisée par l'unité de régulation / d'exploitation (21) pour l'affichage du mode de simulation, ne présentant aucun chevauchement avec la gamme utile (4).

7. Procédé selon au moins l'une des revendications précédentes,
pour lequel un passage dans le mode de simulation est effectué lorsqu'au moins un composant sensible (22) du capteur (2) adopte au moins une valeur définie.

8. Procédé selon au moins l'une des revendications précédentes,
pour lequel, en mode de simulation, un message OK, un message d'avertissement et/ou un message d'erreur est émis sur l'état du capteur (2), l'unité de régulation / d'exploitation (21) émettant, dans le cas d'un message OK, un premier échantillon préréglé de signaux électriques analogiques,
l'unité de régulation / d'exploitation (21) émettant, dans le cas d'un message d'avertissement, un deuxième échantillon préréglé de signaux électriques analogiques, lequel est différent du premier échantillon,
l'unité de régulation / d'exploitation (21) émettant, dans le cas d'un message d'erreur, un troisième échantillon préréglé de signaux électriques analogiques, lequel est différent du premier et du deuxième échantillon,
les signaux électriques analogiques destinés à l'affichage du message OK et du message d'avertissement se situant dans la gamme de valeurs [Sₘᵢₙ, Sₘₐₓ],
et les signaux électriques analogiques destinés à l'affichage du message d'erreur se situant en dehors de la gamme de valeurs [Sₘᵢₙ, Sₘₐₓ],
et le message OK et/ou le message d'avertissement étant enregistrés.

9. Procédé selon la revendication 8,
pour lequel le capteur (2) est remis en mode de mesure après l'émission du message OK et/ou du message d'avertissement.

10. Procédé selon au moins l'une des revendications précédentes,
pour lequel un passage dans le mode de simulation est déclenché manuellement, de préférence par une interruption de la tension du capteur (2), par l'actionnement d'un interrupteur magnétique et/ou par communication en champ proche.

11. Dispositif destiné à l'étalonnage in-situ d'une section de transmission de mesure analogique (1) pendant la détermination et/ou la surveillance d'une grandeur de process d'un produit, le dispositif pour la réalisation du procédé selon au moins l'une des revendications 1 à 10 étant constitué
d'un capteur (2) et d'une unité de commande,
le capteur (2) comportant au minimum un composant sensible (22) et une unité de régulation / d'exploitation (21),
et l'unité de régulation / d'exploitation (21) étant reliée avec l'unité de commande (3) via la section de transmission de mesure (1).

12. Dispositif selon la revendication 11,
pour lequel le capteur (2) comporte un composant sensible à la température (22) et un élément de référence (23), lequel subit une transition de phase au niveau d'au moins un point de température prédéfini,
l'unité de régulation / d'exploitation (21) étalonnant au niveau du point de température fixe le composant sensible à la température (22) au moyen de l'élément de référence (23) et déterminant l'écart du composant sensible à la température (22) par rapport au point de température prédéfini par l'élément de référence (23),
et l'unité de régulation / d'exploitation (21) provoquant un passage du mode de mesure dans le mode de simulation lorsque l'élément de référence (23) parcourt le point de température prédéfini.

13. Dispositif selon la revendication 12,
pour lequel l'unité de régulation / d'exploitation (21) émet, dans le mode de simulation, après l'étalonnage du composant sensible à la température (22) et de la section de transmission de mesure (1), pendant un temps déterminé, un signal électrique analogique constant qui correspond à l'écart du composant sensible à la température (22) par rapport au point de référence prédéfini par l'élément de référence (23) ;
l'unité de commande (3) détectant au moyen de l'écart ΔS du signal électrique constant émis par l'unité de régulation / d'exploitation (21) par rapport à un signal électrique analogique défini, et au moyen du paramétrage de la section de transmission de mesure (1), l'écart du composant sensible à la température (22) par rapport au point de température prédéfini par l'élément de référence (23).

14. Dispositif selon la revendication 13,
pour lequel l'unité de commande (3) enregistre, dans le mode de simulation, l'écart du composant sensible à la température (22) par rapport au point de température prédéfini par l'élément de référence (23).

15. Dispositif selon la revendication 13 ou 14,
pour lequel l'unité de régulation / d'exploitation (21) génère un message OK dans le cas où l'écart du composant sensible à la température (22) par rapport au point de température prédéfini par l'élément de référence (23) passe sous un seuil défini,
et pour lequel l'unité de régulation / d'exploitation (21) génère un message d'avertissement dans le cas où l'écart du composant sensible à la température (22) par rapport au point de température prédéfini par l'élément de référence (23) dépasse un seuil défini.
